Europäisches Patentamt

European Patent Office

Office européen des brevets

(19)

(11) Numéro de publication: **0 063 505
B1**

(12)

# FASCICULE DE BREVET EUROPEEN

(45) Date de publication du fascicule du brevet:
**26.02.86**

(51) Int. Cl.⁴: **C 04 B 14/38**

(21) Numéro de dépôt: **82400488.1**

(22) Date de dépôt: **17.03.82**

(54) **Matériau à base de ciment renforcé de fils de verre et son procédé de fabrication.**

(30) Priorité: **27.03.81 FR 8106250**

(43) Date de publication de la demande:
**27.10.82 Bulletin 82/43**

(45) Mention de la délivrance du brevet:
**26.02.86 Bulletin 86/9**

(84) Etats contractants désignés:
**AT BE CH DE GB IT LI LU NL SE**

(56) Documents cités:
**DE - A - 2 617 601
DE - A - 2 854 228**

**CHEMICAL ABSTRACTS, vol. 92, no. 24, juin 1980 réf.:
202582b, page 267 COLUMBUS, OHIO (US)
CHEMICAL ABSTRACTS, vol. 84, 1976 réf.: 49209y, page
354 COLUMBUS, OHIO (US)**

(73) Titulaire: **Desdoigts, Jacques, 1 rue de la Paix,
F-75002 Paris (FR)**

(72) Inventeur: **Desdoigts, Jacques, 1 rue de la Paix,
F-75002 Paris (FR)**

(74) Mandataire: **Gorree, Jean-Michel et al, Cabinet
Plasseraud 84, rue d'Amsterdam, F-75009 Paris (FR)**

EP 0 063 505 B1

## Description

La présente invention concerne un matériau de grande densité possédant des caractéristiques mécaniques autorisant son usinage, ce matériau possédant une structure stratifiée à base de ciment renforcé par des réseaux de filaments de verre.

L'invention vise surtout mais non exclusivement, des plaques utilisables pour séparer les différents contacts de phase dans des appareils électriques tels que les contacteurs, sectionneurs, disjoncteurs ou analogues ; ces plaques doivent présenter de bonnes caractéristiques de résistance mécanique, d'une part, pour résister aux efforts mécaniques qu'elles subissent à l'apparition des arcs électriques et, d'autre part, pour pouvoir être usinées facilement en vue de leur incorporation dans l'appareillage electrique.

Dans la suite de la description on distinguera les fils (éléments de grande longueur) et les fibres téléments de longueur moindre, voire de très faible longueur).

On connaît déjà, dans l'industrie électrique et l'industrie du bâtiment des matériaux electriquement et/ou thermiguement isolants, produits généralement en plagues, à base de ciment renforcé d'un matériau en fibres telles que des fibres d'amiante, des fibres de carbone, des fibres de céramigue, ou autres.

Toutefois, ces matériaux connus présentent divers inconvénients, soit en raison de la toxicité de la matière fibreuse utilisée et des dangers qu'entraîne sa manipulation (cas de l'amiante) soit en raison de caractéristiques de résistance mécanique insuffisantes des plaques ainsi obtenues pour les applications plus spécifiquement envisagées dans le cadre de l'invention.

On connaît également des matériaux à base de ciment renforcé de fibres de verre qui ont trouve une application dans l'industrie du bâtiment. Toutefois, la fibre de verre n'est incorporée au ciment que sous forme de segments non ordonnés et de tres courte longueur de l'ordre de quelques millimètres. La demande de brevet DE-A-2 617 601 décrit un matériau calorifuge de ce genre permettant de constituer des plaques d'isolation, les fibres de verre étant disposées en nappes qui peuvent être situées au tiers supérieur et au tiers inferieur de l'épaisseur de la plaque ainsi constituée. Dans tous les cas le renfort est réalisé par des fibres de verre et il en résulte que les matériaux ainsi obtenus ne présentent pas des caractéristiques de résistance mécanique suffisantes pour supporter les efforts déformants engendrés par un arc électrique de coupure lorsque des plaques de ces matériaux sont utilisées dans les contacteurs ou analogues.

Ce mangue de résistance mécanique est encore accru par le fait que les ciments utilisés n'adhèrent pas ou adhèrent mal aux fibres de verre et que la répartition des efforts au sein du matériau est mauvaise.

L'invention a donc principalement pour objet la réalisation d'un matériau qui satisfasse sur le plan mécanique aux diverses exigences de la technique mieux que ne le font les divers matériaux actuellement connus, notamment en vue de la constitution de plaques de séparation de contacts de phase dans les appareils électriques tels que les contacteurs ou analogues, ce matériau amelioré devant pouvoir offrir les mêmes possibilites d'usinage que les matériaux utilisés jusqu'à présent dans ce but et devant pouvoir être facilement fabriqué.

A ces fins, on prévoit, conformément à l'invention, que le matériau comporte une alternance, répartie sur toute l'épaisseur du matériau, de couches minces de ciment alumineux et de nappes de tissu de fils de verre à mailles ouvertes en fils de silione éclaté (ou fil texturé à écailles) -en soi connu- qui ont un poids compris entre 34 tex et 600 tex, qui ont un nombre de mailles par centimètre-carré compris entre 1 et 22 et qui s'étendent d'un seul tenant sur toute la dimension correspondante du matériau.

Les écailles des fils procurent un ancrage dans le ciment assurant une bonne répartition des efforts au sein du matériau, qui, conjuguée avec la présence de fils longs s'étendant sur toute la longueur ou la largeur des pièces ainsi constituées, conduit à des caractéristiques de résistance mécanique particulièrement favorables qui sont supérieures à celles des matériaux antérieurs.

En outre, le recours à un tissu à mailles ouvertes associe aux avantages précédents les avantages supplémentaires d'une bonne cohésion des fils (notamment lorsqu'ils sont liés) sous une éqaisseur minimum (ce qui permet d'augmenter le nombre des cauches de tissu pour une épaisseur donnée de matéeriau, et donc d'accroître la résistance méanigue) tout en autorisant l'écoulement du ciment dans les mailles et l'adhésion entre elles des couches successives de ciment à l'intérieur des mailles, conduisant à une structure homogène du matériau.

Bien entendu, le tissu peut être tissé ou bien il peut être tricoté, en particulier pour la constitution de pieces non planes (pièces de forme) présentant des courbures importantes.

Des pièces, notamment des plaques, constituées du matériau de l'invention peuvent avantageusement être fabriquées selon le procédé suivant :

- on dépose dans le moule des couches minces alternées de ciment alumineux liguide et de tissus de fils de verre à mailles ouvertes en fils de silione éclaté qui ont un poids compris entre 34 tex et 600 tex qui ont un nombre de mailles par centimètre-carré compris entre 1 et 22, et qui s'étendent d'un seul tenant sur toute la dimension correspondante du moule et

- en ce qu'on comprime le tout avant la prise du ciment, sous une pression inférieure à 29,4 MPa, de préférence comprise entre 4,9 et 19,6 MPa.

L'invention sera mieux comprise à la lecture de la description qui suit d'un mode de réalisation préféré donné uniquement à titre illustratif ; dans cette description, on se réfère au dessin annexé sur leguel :.

- la figure 1 est une vue partielle avec arrachements d'une plague constituée conformément à l'invention, et

- la figure 2 est une vue schématique illustrant le procédé de fabrication de la plaque de la figure 1, conformement à l'invention.

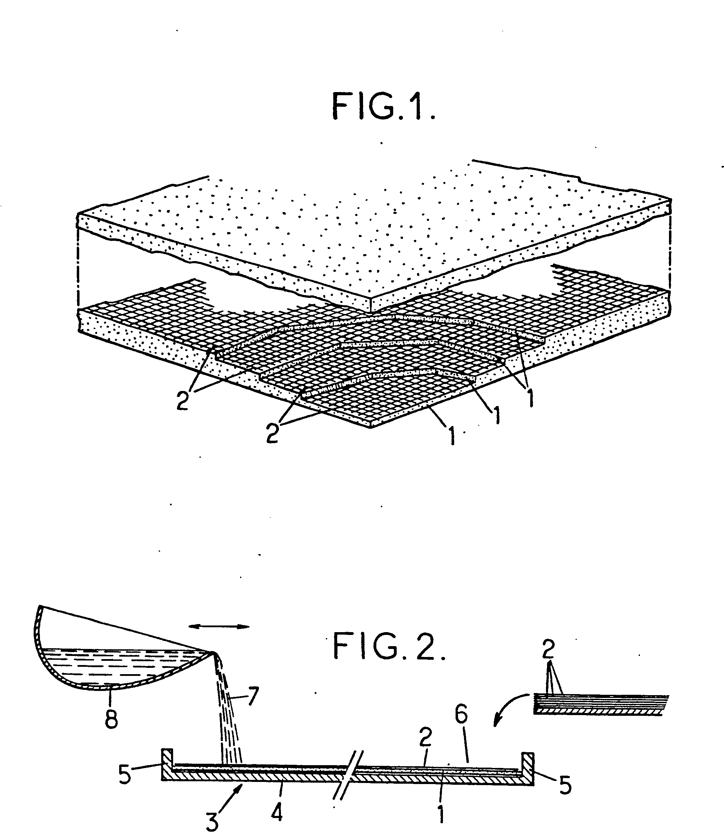

·Comme représenté à la fig. 1, le matériau de l'invention est constitué par une masse de ciment au sein duquel sont réparties un certain nombre de nappes de renforcement en fils de verre. Plus précisément, le matériau se présente sous forme stratifiée résultant d'une alternance de couches de ciment 1 et de nappes de fils 2.

En raison de la médiocre adhérence du ciment sur les fils de Derre, on prévoit, d'une part, que les fils utilisés soient des fils de silione éclaté (ou fil texturé à écailles).qui peuvent s'ancrer dans le ciment les entourant et, d'autre part, que les fils de chaque nappe définissent, au sein des nappes, des espaces libres de dimensions suffieantes pour qu'en cours de fabrication la suspension liquide de ciment puisse y couler et que, après durcissement, deux couches de ciment consécutives (situées de part et d'autre de la nappe considérée) soient soudées l,une à l'autre à travers ces espaces libres, de telle sorte que la nappe soit à proprement parler emprisonnée dans le ciment.

Les nappes peuvent être constituées de toute façon appropriée satisfaisant aux exigences ci-dessus.

Toutefois, dans le souci de simplifier la fabrication du matériau et dans le souci d'obtenir des performances maximales sur le plan de la résistance mécanique, il semble qu'il y ait lieu de donner la préférence à des nappes se présentant sous forme d'un tissu de fils de verre à mailles ouvertes en fil de silione éclaté. On est ainsi assuré de satiefaire aux conditions ci-dessus mentionnées et en particulier l'ancrage des fils dans le ciment et la répartition des espaces libres (mailles) sont reguliérs tout au long des fils.

Toujours pour l'obtention d'une résistance mécanique maximale, chaque nappe de fils n'est constituée que d'un tissu continu, chaque fil s'étendant d'un bord à l'autre de la pièce. En outre, chaque nappe ne comprend qu'une seule épaisseur de tissu, de sorte que, pour une épaisseur de plaque donnée, on puisse mieux répartir les nappes de tissu et donc mieux répartir les efforts internes dans la pièce.

Dans le cadre de l'invention, par tissu on entend une structure tissée avec fils de chaîne et fils de trame. Mais il n'est pas exclu que le tissu envisagé possède une structure tricotée, notamment pour la fabrication de pièces de forme présentant des courbures importantes.

Bien entendu, les fils constitutifs du tissu peuvent être libres ou lies, en fonction des applications envisagées.

Les tissus utilisables conformément à l,invention ont un nombre de mailles par centimètre carré compris entre environ 1 (en dessous duquel la résistance mécanique deviendrait insuffisante) et 22 (au-delà duquel le ciment ne pourrait plus pénétrer à travers les mailles), de préférence entre environ 1 et 10.

Le poids du fil utilisé pour la constitution du tissu est compris entre environ 34 tex et 600 tex.

Le nombre de couches de tissu à prévoir depend évidemment de l'epaisseur des pièces et des applications auxquelles elles sont destinées. A titre d'exemple, pour des plaques séparatrices de contacts dans un contacteur électrique, on prévoit 40 couches de tissu constitué en fil de 68 tex pour une plaque de 6 mm d'épaisseur. Pour d'autres applications, on peut utiliser 8 couches de tissu en fil de 440 tex (soit 180 g/m$^2$ ) pour des plaques de même épaisseur.

Pour ce qui est de la nature des matériaux, on choisira ceux qui sont les mieux appropriés aux applications envisagées.

Le fil de verre peut être constitue en verre normal (ou verre E), mais il est en général souhaitable, pour une plus longue durée de vie du matériau, de choisir des fils pour ciment en verre spécial resistant aux alcalis.

Quant au ciment, on choisira également celui qui est le plus utilisé et/ou le mieux approprié : par exemple ciment Portland dans le cas d'applications dans le domaine du bâtiment ou analogue (protection thermique) ou bien ciment alumineux pour fabriquer des plaques de protection électrique et/ou thermique (notamment plaques de protection contre l'arc de coupure dans les contacteurs électriques).

Des pièces conformes à l'invention peuvent être fabriquées selon différents procédés plus ou moins complexes et/ou coûteux à mettre en oeuvre.

Un procéde particulierement simple et économique pour la réalisation de pièces de dimensions relativement nodestes, et bien adapté en tout cas pour la fabrication en moyenne série de plaques d'isolement électrique pour contacteurs ou analogues, peut être le suivant (voir figure 2).

On réalise un moule 3 adapté au format des plaques à fabriquer et constitué par un fond 4 muni d'un bord périphérique 5 délimitant une cuvette 6.

Dans la cuvette 6, on commence par verser la suspension liquide de ciment 7, à partir d'un bac 8 mobile audessus du moule 3, pour former une première couche 1 de ciment.

On dispose alors sur cette première couche de ciment une bande 2 de tissu en fils de verre de silione éclaté, cette bande étant de prérénce d'un seul tenant pour couvrir toute la couche de ciment.

Puis on verse é nouveau du ciment pour couvrir la bande de tissu 2 et constituer une deuxième couche de ciment. Comme expliqué déjà précédemment, le ciment de la deuxième couche pénètre dans les mailles du tissu pour s'amalgamer au ciment de la première couche et emprisonner ainsi la bande de tissu, dont les écailles des fils pénètrent en outre dans le ciment.

Une fois la deuxième couche de ciment étendue, on met en place une deuxième bande de tissu, puis on procéde à l'étalement d'une troisiéme couche de ciment. Et ainsi de suite jusqu'à la derniére couche de ciment.

L'ensemble stratifié est alors soumis à une compression sous une pression inférieure à 29,4 MPa, de préféprence comprise entre 4,9 et 19,6 MPa.

Bien que, sur la figure 2, le fond 4 du moule soit représenté sous forme dlun plateau, il est entendu que la forme du moule est en fait fonction de la forme de la pièce à obtenir.

Le procédé qui vient d'être décrit peut aussi bien être effectué manuellement qu'automatiquement.

Comme il va de soi et comme il résulte d'ailleurs déjà de ce qui précède, l'invention ne se limite nullement à ceux de ses modes d'application et de réalisation qui ont été plus spécialement envisagés.

**Revendications**

1. Matériau de grande densité possédant des caractéristiques mécaniques autorisant son usinage, ce matériau possédant une structure stratifiée à base de ciment renforcé par des réseaux de filaments de verre, caractérisé en ce gu'il comporte une alternance, répartie sur toute l'épaisseur du matériau, de couches minces (1) de ciment alumineux et de nappes (2) de tissu de fils de verre à mailles ouvertes en fils de silione éclaté (ou fil texturé à écailles) -en soi connu- qui ont un poids compris entre 34 tex et 600 tex, qui ont un nombre de mailles par centimètre-carré compris entre 1 et 22,et quis'étend d'un seul tenant sur toute la dimension correspondante du matériau.

2. Matériau selon la revendication 1, caractérisé en ce que le nombre de mailles par centimètre-carré est compris entre environ 1 et 10.

3. Matériau selon la revendication 1 ou 2, caractérisé en ce que le tissu est à fils libres.

4. Matériau selon la revendication 1 ou 2, caractérisé en ce que le tissu est à fils liés.

5. Matériau selon l'une guelcongue des revendications 1 à 4, caractérisé en ce que le tissu est tissé.

6. Matériau selon l'une quelcongue des revendications 1 à 4, caractérisé en ce que le tissu est tricoté.

7. Procédé pour fabriguer par moulage une pièce constituée en un matériau stratifié selon l'une guelcongue des revendications 1 à 6, caractérisé en ce que :
- on dépose dans le moule des couches minces alternées de ciment alumineux ligjide et de tissus de fils de verre à mailles ouvertes en fils de silione éclaté gui ont un poids compris entre 34 tex et 600 tex, gui ont un nombre de mailles par centimètre-carré compris entre 1 et 22,et gui s'étendent d'un seul tenant sur toute la dimension correspondante du moule, et

- en ce gu'on comprime le tout, avant la prise du ciment, sous une pression inférieure à 29,4 MPa de préférence comprise entre 4,9 et 19,6 MPa.

**Claims**

1. A high density material possessing mechanical characteristics allowing it to be machined, this material having a stratified structure based on cement reinforced by networks of glass filaments, characterized in that it comprises, throughout the whole thickness of the material, alternating thin layers (1) of aluminous cement and blankets (2) of open mesh glass thread fabric made of threads of chipped silionne filaments (or chipped textured yarn) - known per se - which threads weigh between 34 tex and 600 tex, have a mesh number per square centimetre of between 1 and 22 and extend in one piece over the whole corresponding dimension of the material.

2. A material according to claim 1, characterized in that the mesh number per square centimatre is between approximately 1 and 10.

3. A material according to claim 1 or claim 2, characterized in that the fabric is made of loose threads.

4. A material according to claim 1 or claim 2, characterized in that the fabric is made of bonded threads.

5. A material according to any one of claims 1 to 4, characterized in that the fabric is woven.

6. A material according to any one of claims 1 to 4, characterized in that the fabric is knitted.

7. A process for the production by moulding of an article consisting of a stratified material according to any one of claims 1 to 6, characterized in that:
- there are arranged in the mould alternate thin layers of liquid aluminous cement and open mesh glass thread fabric made of threads of chipped silionne filaments, which threads weigh between 34 tex and 600 tex, have a mesh number per square centimetre of between 1 and 22 and extand in one piece over the whole corresponding dimension of the mould, and
- that the whole is comressed, before the cement sets, under a pressure lower than 29.4 Mpa, and preferably between 4.9 and 19.6 Mpa.

**Patentansprüche:**

1. Material großer Dichte mit seine Bearbeitung ermöglichenden mechanischen Eigenschaften? welches Material einen Schichtaufbau auf der Basis von mit Netzen aus Glasfilamenten verstärktem Zement aufweist i dadurch gekennzeichnet, daß es eine über die gesamte Materialstärke alternierende Folge von dünnen Schichten (1) aus Tonerdezement und von offenmaschigen Glasfädengelegen (2) aus aufgeplatzten Silionne glasfäden (oder schuppenartig texturierten Fäden) - die an sich bekannt sind - aufweist, die ein Gewicht zwischen 34 tex uönd 600 tex haben, welche Gelege eine Maschenanzahl je Quadratzentimeter von 1 bis 22 besitzen und sich ununterbrochen über die gesamte entsprechende Abmessung des Materials erstrecken.

2. Material nach Anspruch 1, dadurch gekennzeichnet, daß die Maschenanzahl je Quadratzentimeter zwischen ungefähr 1 und 10 beträgt.

3. Material nach Anspruch 1 oder 2, dadurch gekennzeichnet, daß das Gelege aus freien, ungebundenen Fäden besteht.

4. Material nach Anspruch 1 oder 2, dadurch gekenszeichnet, daß das Gelege aus gebundenen Fäden besteht.

5. Material nach einem der Ansprüche 1 bis 4, dadurch gekennzeichnet, daß das Gelege gewebt ist.

6. Material nach einem der Ansprüche 1 bis 4, dadurch gekennzeichnet, daß das Gelege gewirkt oder gestrickt ist.

7. Verfahren zur Herstellung eines aus einem Schichtmaterial nach einem der Ansprüche 1 bis 6 gebildeten Gegenstandes durch Formgebung, dadurch gekennzeichnet, daß man:
- in der Form aufeinanderfolgend dünne Schichten aus flüssigem Tonerdezement und offenmaschigen Glasfadengelegen aus aufgeplatzten Silionneglasfäden anordnet, die ein Gewicht zwischenzentimeter 34 tex und 600 tex aufweisen, eine Maschenanzahl je Quadratzentimeter zwischen 1 und 22 besitzen und sich ununterbrochen über die gesamte entsprechende Abmessung der Form erstrecken,und
- das gesamte Gebilde vor dem Erhärten des Zements mit einem Druck von weniger als 29,4 MPa, vorzugsweise zwischen 4,9 und 19,6 MPa, zusammenpreßt.

# FIG.1.

# FIG.2.